Europäisches Patentamt

European Patent Office

Office européen des brevets

(11) Numéro de publication: **0 567 382 A1**

# DEMANDE DE BREVET EUROPEEN

(21) Numéro de dépôt: **93401005.9**

(51) Int. Cl.⁵: **G01F 23/24**

(22) Date de dépôt: **19.04.93**

(30) Priorité: **21.04.92 FR 9204840**

(43) Date de publication de la demande:
**27.10.93 Bulletin 93/43**

(84) Etats contractants désignés:
**DE ES GB IT**

(71) Demandeur: **SOCIETE D'APPLICATIONS GENERALES D'ELECTRICITE ET DE MECANIOUE SAGEM**
**6, Avenue d'Iéna**
**F-75783 Paris Cédex 16(FR)**

(72) Inventeur: **Lhomme, Francois**
**8 rue Maurice Ravel,**
**Jouy le Moutier**
**F-95000 Cergy(FR)**
Inventeur: **Levesque,Xavier**
**9 Grand Place**
**F-95000 Cergy(FR)**

(74) Mandataire: **Bloch, Gérard et al**
**2, square de l'Avenue du Bois**
**F-75116 Paris (FR)**

(54) **Procédé de contrôle du niveau d'un liquide par élément résistif et circuit pour la mise en oeuvre du procédé.**

(57) On alimente un élément (2) résistif thermo-sensible, en contact avec le liquide, en courant constant issu d'un générateur (3) et la tension V(t) à ses bornes varie depuis l'établissement du courant et on détermine la position relative de l'élément (2) et de la surface du liquide d'après l'allure de la variation de la tension V(t). On peut donc contrôler le niveau de liquide dans un carter (1). Pour s'affranchir de la température ambiante, on détecte la fonction V(t) puis, par un amplificateur dérivateur (9), la dérivée première $\dot{V}(t)$ de la fonction V(t) qui est appliquée à un amplificateur intégrateur (11) fournissant l'intégrale de la dérivée $\dot{V}(t)$, avant de déduire ladite position relative.

FIG. UNIQUE

EP 0 567 382 A1

Rank Xerox (UK) Business Services
(3.10/3.6/3.3.1)

La présente invention concerne tout d'abord un procédé de contrôle du niveau d'un liquide dans un carter, ou réservoir, dans lequel on immerge, dans le liquide, un élément métallique résistif sensible à la température, dans une position déterminée dans le carter, et on alimente l'élément en courant constant, pendant une durée déterminée très courte, ce qui, à partir de l'établissement de ce courant, fait varier dans le temps la température de l'élément résistif et donc la tension à ses bornes entre une tension $V_{APC}$ (après contact) et une tension finale, pour déterminer, après conversion, la position relative de l'élément et de la surface du liquide et donc contrôler le niveau de liquide dans le carter.

Un tel procédé est notamment utilisé pour contrôler le niveau d'huile dans un moteur de véhicule, tout de suite après avoir mis le contact, à l'instant $t_{APC}$, mais avant de mettre en marche le moteur.

La résistance globale de l'élément, de préférence à coefficient de température élevé, dépend naturellement du rapport entre les longueurs de la partie de l'élément qui est immergée, refroidie par le liquide, et de la partie émergée, moins refroidie que l'autre. Cette résistance globale dépend donc du niveau du liquide, c'est-à-dire de la position relative de l'élément et de la surface du liquide.

Pour s'affranchir de la température ambiante, il est proposé, dans FR-A-2367276, de comparer la tension finale et la tension $V_{APC}$. Mais cela présente deux inconvénients. Il faut mettre la tension $V_{APC}$ en mémoire, d'une part, et attendre la fin de la mesure au moment où la tension aux bornes de l'élément atteint sa valeur finale, d'autre part.

La présente invention vise à éliminer au moins le premier de ces deux inconvénients.

A cet effet, la présente invention concerne un procédé de contrôle du niveau d'un liquide dans un carter, dans lequel on immerge, dans le liquide, un élément métallique résistif sensible à la température dans une position déterminée dans le carter, et on alimente l'élément en courant constant ce qui, à partir de l'établissement de ce courant à un instant $t_{APC}$, fait varier dans le temps la température de l'élément résistif et donc la tension $V(t)$ à ses bornes depuis une tension $V_{APC}$, pour déterminer, après conversion, la position relative de l'élément et de la surface du liquide et donc contrôler le niveau du liquide dans le carter, procédé caractérisé par le fait que, pour s'affranchir de la température ambiante, on détecte la fonction $V(t)$ de la variation temporelle de la tension aux bornes de l'élément, puis la dérivée première $\dot{V}(t)$ de la fonction $V(t)$ avant de déduire ladite position relative.

Dans l'invention, il n'est ainsi procédé à aucune comparaison et donc à aucune mise en mémoire.

Grâce à l'invention, on n'est pas astreint à maintenir le courant dans l'élément aussi longtemps que dans le procédé de l'art antérieur et, même, le niveau de liquide, indépendamment de la température ambiante, peut être contrôlé pratiquement dès l'établissement du courant constant dans l'élément, puisque c'est l'allure temporelle de la dérivée qui fournit l'information pertinente, information qui peut être affinée au fil du temps, par intégration de cette dérivée.

La dérivée supprime la composante continue, due notamment à la température ambiante de la fonction $V(t)$, ce qui permet donc de s'affranchir de cette température ambiante. L'intégration qui peut suivre revient alors à procéder à un changement d'ordonnées de la tension $V(t)$. Le procédé de l'invention permet finalement de ne prendre en compte que la forme de la courbe $V(t)$.

En effet, l'élément métallique résistif ayant une partie immmergée, au contact du liquide, et l'autre partie, émergée, au contact de l'air, chacune de celles-ci tend à prendre une température d'équilibre dépendant de la résistance thermique du fluide en contact. Par ailleurs, la vitesse d'évolution de ces deux températures dépend de l'inertie thermique de l'élément métallique chauffant et de celle du fluide. On définit ainsi deux tensions V1 et V2, dépendant du coefficient de température de l'élément métallique résistif, correspondant respectivement à la valeur asymptotique de la variation de tension sur la partie émergée et sur celle immergée, auxquelles sont respectivement associées des constantes de temps t1 et t2.

La fonction $V(t)$ a alors l'allure suivante après application du courant de chauffage au temps $t = 0$ :

$$V(t) = V_{APC} + V1(1-e^{\frac{-t}{t1}}) + V2(1-e^{\frac{-t}{t2}})$$

La pente de cette fonction est définie par sa dérivée par rapport au temps :

$$\dot{V}(t) = \frac{V1}{t1} \times e^{-\frac{t}{t1}} + \frac{V2}{t2} \times e^{-\frac{t}{t2}}$$

La pente de V(t) ne dépend donc pas de la valeur $V_{APC}$ qui est la valeur de V(t) à l'instant initial à t = 0.

A l'instant t = 0, la pente vaut :

$$\dot{V}(t) = \frac{V1}{t1} + \frac{V2}{t2}$$

c'est-à-dire que, t1 et t2 étant fixes, elle dépend de la longueur de la partie respectivement émergée et immergée de l'élément métallique résistif.

Comme cet élément a une longueur constante, toute variation de la hauteur du liquide, traduite par une variation de même sens de V2, entraîne une variation en sens inverse de V1.

De ce fait, la courbe composite $\dot{V}(t) = \frac{V1}{t1} + \frac{V2}{t2}$

est monotone et traduit de façon biunivoque les variations du niveau de liquide.

L'information désirée peut ainsi être obtenue dès l'instant t = 0 initial, par comparaison à une table d'étalonnage.

L'information de niveau peut être confirmée, ou obtenue, indépendemment de la valeur initiale de la dérivée $\dot{V}(t)$, en mesurant la vitesse d'évolution de celle-ci, c'est-àdire sa pente, dérivée seconde de V(t), à un instant donné ou bien son amplitude $\dot{V}(t)$.

En effet, si la sonde est essentiellement émergée, V1 est prépondérante devant V2, si bien que la fonction de la courbe représentant la dérivée V(t), a une constante de temps voisine de t1. Dans le cas opposé, où la sonde est essentiellemnt immergée, la constante de temps ci-dessus est voisine de t2.

Ainsi, la pente ou l'amplitude de la dérivée V(t), à un instant t donné, correspond de façon biunivoque à une courbe composite dont la constante de temps est comprise entre t1 et t2. L'amplitude ou la pente de la dérivée $\dot{V}(t)$ mesurée à un instant donné, ou pendant une durée donnée, au bout d'un délai connu à compter de l'instant t = 0, permet de déterminer sans ambiguïté la position du niveau du liquide, par référence à une table d'étalonnage contenant une échelle de valeurs mémorisées correspondant au délai ci-dessus.

On remarquera que, comme il s'agit de fonctions exponentielles, donc dont les dérivées ou intégrales successives de chacune sont proportionnelles à la fonction de départ, l'information indiquant le niveau de liquide existe dans toute fonction composite intégrale ou dérivée, à un degré quelconque, de la fonction V-(t).

En particulier, si l'on intègre par rapport au temps la dérivée $\dot{V}(t)$, on obtient à nouveau la fonction V(t), à ceci près que l'on peut choisir d'introduire une constante d'intégration égale à la somme de V1 et V2 mais ne comportant pas la valeur $V_{APC}$. On obtient ainsi, au fil du temps, l'intégrale :

$$\int_{o}^{t} \dot{V}(t)dt = V1(1-e^{-\frac{t}{t1}}) + V2(1-e^{-\frac{t}{t2}})$$

$$= V(t) - V_{APC}$$

On remarquera qu'il n'est pas obligatoire d'effectuer ces opérations dès l'instant d'application du courant, mais que l'on peut attendre pendant une durée déterminée, pour ne pas prendre en compte des oscillations transitoires liées à l'application du courant, ainsi que pour attendre la diminution de la dérivée, théoriquement infinie au début, à une valeur d'une plage mesurable.

La présente invention concerne également un circuit pour la mise en oeuvre du procédé de contrôle de l'invention, comprenant un élément métallique résistif, sensible à la température, relié, d'une part, à un générateur de courant et, d'autre part, à une chaîne de traitement de la tension aux bornes de l'élément résistif qui comprend au moins un amplificateur dérivateur. Ici, ce dernier est suivi d'un amplificateur intégrateur.

La sonde est ici reliée à l'amplificateur dérivateur par l'intermédiaire d'un amplificateur suiveur. On évite ainsi, si besoin est, de détourner du courant au détriment de la sonde.

EP 0 567 382 A1

Un ou plusieurs de ces amplificateurs peuvent comporter un amplificateur opérationnel, qui se présente sous forme intégrée, plusieurs de ces amplificateurs ou tous pouvant même ainsi être contenus dans un seul boîtier. De plus, un amplificateur opérationnel présente une impédance d'entrée élevée, ce qui évite de perturber la sortie de l'élément l'alimentant en signal.

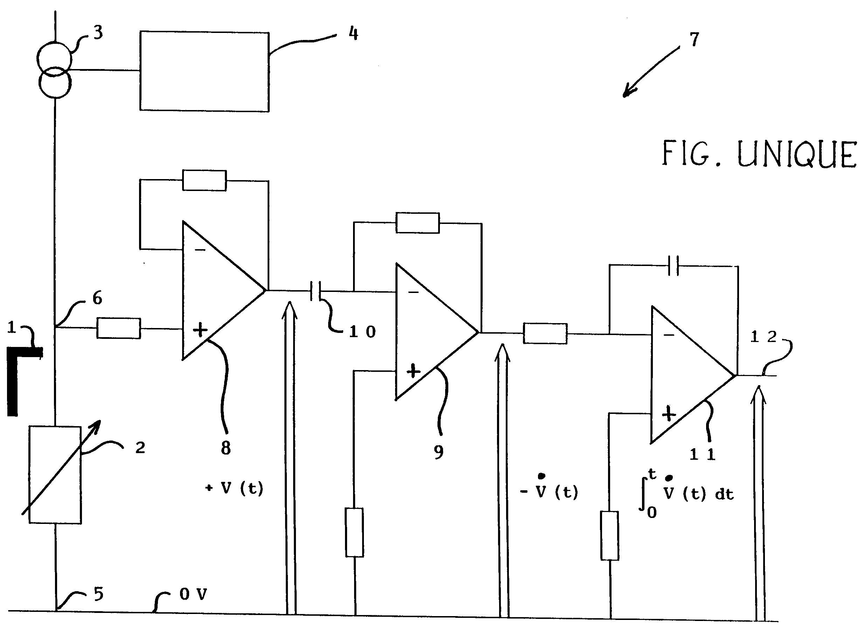

L'invention sera mieux comprise à l'aide de la description suivante des circuits de mise en oeuvre du procédé de l'invention, en référence au dessin annexé, sur lequel la figure unique représente le schéma d'une forme de réalisation préférée du circuit pour la mise en oeuvre du procédé de l'invention.

En référence à la figure, le circuit, de contrôle de niveau d'un liquide dans un carter 1, comprend une sonde 2 constituée d'un élément métallique résistif à coefficient de température élevé, soumis, par une borne 5, au potentiel nul OV et relié, par l'autre borne 6, à un générateur de courant 3 commandé par une base de temps 4. Entre les bornes 5, 6 de l'élément 2 se développe la tension V(t).

A la borne 6 de l'élément 2 est reliée une chaîne 7 de traitement de la tension V(t) comprenant ici un amplificateur suiveur 8, relié, par sa borne d'entrée positive à la borne 6 et dont la sortie est reliée à sa borne d'entrée négative. Il présente une impédance d'entrée élevée et ne détourne ainsi pas de courant au détriment de la sonde 2. Dans l'explication qui suit, les amplificateurs ont un gain en tension adapté pour avoir un signal à traiter suffisant ; pour la clarté de l'exposé, ce gain est supposé être unitaire. Un amplificateur opérationnel 9, assurant la fonction de dérivation, est relié, par sa borne d'entrée négative, et par l'intermédiaire d'un condensateur 10, à la sortie de l'amplificateur suiveur 8 et relié, par sa borne d'entrée positive, au potentiel nul.

A la sortie de l'amplificateur suiveur 8 se développe la tension $+V(t)$ ; à la sortie de l'amplificateur 9, dérivateur, se développe la tension $-\dot{V}(t)$, dérivée par rapport au temps de la fonction $+V(t)$ et de signe opposé.

La sortie de l'amplificateur 9 est reliée à la borne d'entrée négative d'un amplificateur opérationnel intégrateur 11, dont la borne d'entrée positive est reliée au potentiel nul. A la sortie 12 de cet amplificateur 11 se développe la tension :

$$\int_{o}^{t} \dot{V}(t)\,dt = V(t) - V_{APC}$$

Ainsi, avec le circuit qui vient d'être décrit, on considère essentiellement la forme de la courbe de la tension développée aux bornes de la sonde 2.

On comprendra que la présence de l'amplificateur suiveur 8 n'est pas obligatoire et que son rôle peut être tenu par l'amplificateur dérivateur 9 avec un montage approprié. De même, le signe de l'amplification des divers amplificateurs peut être changé.

**Revendications**

1.  Procédé de contrôle du niveau d'un liquide dans un carter (1), dans lequel on immerge, dans le liquide, un élément métallique résistif (2) sensible à la température, dans une position déterminée dans le carter, et on alimente l'élément en courant constant (3) ce qui, à partir de l'établissement de ce courant à un instant $t_{APC}$, fait varier dans le temps la tension V(t) à ses bornes depuis une tension $V_{APC}$, pour déterminer, après conversion, la position relative de l'élément (2) et de la surface du liquide et donc contrôler le niveau de liquide dans le carter (1), procédé caractérisé par le fait que, pour s'affranchir de la température ambiante, on détecte la fonction V(t) de la variation temporelle de la tension aux bornes de l'élément (2) puis (9) la dérivée première $\dot{V}(t)$ de la fonction V(t) en fonction du temps avant de déduire ladite position relative.

2.  Procédé selon la revendication 1, dans lequel on déduit ladite valeur de la position relative à partir de l'intégrale (12) par rapport au temps de la dérivée $\dot{V}(t)$.

3.  Procédé selon l'une des revendications 1 et 2, dans lequel on commence à déterminer lesdites dérivée première $\dot{V}(t)$ et intégrale à l'instant $t_{APC}$.

4.  Circuit pour la mise en oeuvre du procédé de contrôle de l'une des revendications 1 à 3, comprenant un élément métallique résistif (2), sensible à la température, relié, d'une part, à un générateur de courant (3) et, d'autre part, à une chaîne (7) de traitement de la tension aux bornes de l'élément résistif (2) qui comprend au moins un amplificateur dérivateur (9).

5.  Circuit selon la revendication 4, dans lequel l'amplificateur dérivateur (9) est suivi d'un amplificateur intégrateur (11).

6.  Circuit selon l'une des revendications 4 et 5, dans lequel la sonde (2) est reliée à l'amplificateur dérivateur (9) par l'intermédiaire d'un amplificateur suiveur (8).

7.  Circuit selon l'une des revendications 4 à 6, dans lequel l'un desdits amplificateurs (8,9,11), comporte un amplificateur opérationnel.

FIG. UNIQUE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,D | FR-A-2 367 276 (JAEGER) <br> * revendication 1; figures 1,4,6,8 * <br> --- | 1-5 | G01F23/24 |
| Y | EP-A-0 008 508 (LUCAS INDUSTRIES LTD) <br> * abrégé * <br> * page 2 - page 3; figures 1,2 * | 1-5 | |
| A | | 6 | |
| | --- | | |
| A | EP-A-0 166 034 (VDO ADOLPH SCHINDLING AG) <br> * abrégé; figure 3 * | 1-5 | |
| | ----- | | |
| | | | **DOMAINES TECHNIQUES RECHERCHES (Int. Cl.5)** |
| | | | G01F |

Le présent rapport a été établi pour toutes les revendications

| Lieu de la recherche | Date d'achèvement de la recherche | Examinateur |
|---|---|---|
| BERLIN | 05 JUILLET 1993 | VORROPOULOS G. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................
& : membre de la même famille, document correspondant

EPO FORM 1503 03.82 (P0402)